# FASCICULE DE BREVET EUROPEEN

(11) **EP 1 307 351 B1**
(45) Date de publication et mention de la délivrance du brevet: **22.03.2006**
(21) Numéro de dépôt: 01960362.0
(22) Date de dépôt: 22.06.2001
(51) Int. Cl.: B60C 15/024, B60C 15/06, B60C 15/00

(54) **PNEUMATIQUE AVEC DES BOURRELETS DE STRUCTURE AMELIOREE**
REIFEN MIT VERBESSERTER WULSTSTRUKTUR
TYRE WITH IMPROVED BEAD STRUCTURE

(30) Priorité: 03.07.2000 FR 0008649
(43) Date de publication de la demande: 07.05.2003
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: BORDOZ, Francis, F-63100 Clermont-Ferrand (FR); PATTERSON, Forrest, F-63000 Clermont-Ferrand (FR)
(74) Mandataire: Diernaz, Christian
(86) Numéro de dépôt international: PCT/EP2001/007125
(87) Numéro de publication internationale: WO 2002/002355

(56) Documents cités:
- EP-A- 0 678 404
- WO-A-00/41902
- WO-A-95/23073
- WO-A-99/64258
- US-A- 4 580 610

## Description

La présente invention concerne un pneumatique destiné à être monté sur une jante ayant au moins un premier siège tronconique dont la génératrice a une extrémité axialement extérieure plus proche de l'axe de rotation que l'extrémité axialement intérieure.

Un tel pneumatique est décrit dans la demande WO 94/13498 de la demanderesse. Il comprend au moins un premier bourrelet, destiné à être monté sur ledit premier siège de jante incliné vers l'extérieur, ledit premier bourrelet, de largeur axiale usuelle et terminé axialement à l'extérieur par une pointe de bourrelet, ayant un siège de bourrelet dont la génératrice a son extrémité axialement extérieure plus proche de l'axe de rotation que son extrémité axialement intérieure, ladite génératrice étant prolongée axialement à l'extérieur par une face extérieure délimitant la pointe de bourrelet, ladite face faisant avec l'axe de rotation un angle γ, ouvert radialement et axialement vers l'extérieur, et inférieur à 90°. L'armature de carcasse radiale dudit pneumatique, ancrée dans chaque bourrelet à au moins un élément de renforcement annulaire inextensible, possède un profil méridien, lorsque le pneumatique est monté sur sa jante de service et gonflé à sa pression de service, avec un sens de courbure constant dans les flancs et bourrelet.terminés par la pointe et qui est tel que, dans ledit bourrelet, la tangente au point de tangence dudit profil avec l'élément annulaire inextensible dudit bourrelet fait avec l'axe de rotation un angle ø ouvert vers l'extérieur d'au moins 70°.

Le bourrelet d'un tel pneumatique, et plus particulièrement la structure de l'accrochage de l'armature de carcasse peut être variable. Dans la demande internationale WO 95/23073, l'armature de carcasse radiale est ancrée à l'élément inextensible par enroulement autour dudit élément en allant du talon à la pointe du bourrelet pour former un retournement s'étendant dans un profilé de mélange caoutchouteux sous forme de coin délimité par deux côtés issus d'un sommet A localisé sous la section de la tringle enrobée, le côté radialement externe faisant, avec une parallèle avec l'axe de rotation passant par ledit sommet A, un angle ø₁ aigu, ouvert radialement et axialement vers l'extérieur et compris entre 20° et 70°, et le côté radialement interne faisant avec ladite parallèle un angle ø₂ aigu, ouvert radialement vers l'intérieur et compris entre 0° et 30°, et le mélange caoutchouteux formant le profilé, axialement adjacent à la tringle, ayant une dureté Shore A au moins égale à 65 et supérieure à la (aux) dureté(s) Shore A des mélanges caoutchouteux axialement et radialement au dessus de la tringle et du profilé.

Afin de remédier à la propagation vers la tringle de fissures prenant naissance dans la couche extérieure protectrice du bourrelet, la demande PCT/EP99/10472 publiée sous le numéro WO00/41902 prévoit une localisation précise de l'extrémité du retournement d'armature de carcasse, ledit retournement renforçant au moins le profilé de caoutchouc sous forme de coin situé axialement à l'extérieur de la tringle d'ancrage. Ledit profilé en forme de coin est fait d'un mélange de caoutchouc de dureté plus élevée que la (les) dureté(s) des mélanges de caoutchouc radialement au-dessus respectivement de l'élément annulaire d'ancrage et dudit profilé.

Les structures décrites ci-dessus, bien qu'ayant résolu le problème majeur de la propagation des fissures, n'apportent aucune solution valable à la naissance des dites fissures, l'instant où apparaissent les fissures du mélange protecteur de bourrelet arrivant trop tôt dans la vie du pneumatique. Les dites structures présentent en outre certains inconvénients non négligeables, en particulier du point de vue netteté du comportement sur route des véhicules de tourisme équipés de grosses dimensions : la tenue du véhicule sous l'effet des efforts transversaux et longitudinaux doit être améliorée.

L'invention a pour but de remédier aux inconvénients ci-dessus l'instant tout en conservant les excellentes propriétés d'anti-décoincement des bourrelets du pneumatique de la jante de service, ce qui en fait un pneumatique qui ne déjante pas.

Le pneumatique à armature de carcasse radiale, conforme à l'invention, comprend, vu en section méridienne, deux bourrelets, chaque bourrelet ayant un siège dont la génératrice est inclinée vers l'extérieur et un talon axialement à l'intérieur, renforcé par au moins un élément annulaire inextensible autour duquel l'armature de carcasse s'enroule an allant du dit talon à la pointe dudit bourrelet pour former un retournement, alors que la pointe, axialement à l'intérieur, comprend un profilé de mélange caoutchouteux de dureté Shore A au moins égale à 65 et sous forme de coin délimité par trois côtés dont deux sont issus d'un sommet A localisé sous l'élément annulaire, le retournement d'armature de carcasse longeant les côtés latéral et radialement interne dudit profilé en forme de coin et possédant une extrémité située d'une part axialement à l'extérieur d'une droite P₂ perpendiculaire à l'axe de rotation et passant par le centre de gravité de la section méridienne de l'élément annulaire d'ancrage et d'autre part axialement à l'intérieur et radialement à l'extérieur de la droite P₁ passant par ledit centre de gravité et faisant avec l'axe de rotation un angle ouvert axialement et radialement vers l'extérieur compris entre 30° et 60°. Par ailleurs, ce pneumatique comprend deux profilés de mélange caoutchouteux remplissant l'espace entre la partie principale d'armature de carcasse et son retournement au-dessus de l'élément annulaire et du profilé en forme de coin, l'un desdits profilés étant situé radialement au-dessus de l'élément annulaire. Ce pneumatique est caractérisé en ce que au moins l'un des profilés de mélanges caoutchouteux remplissant l'espace entre la partie principale d'armature de carcasse et son retournement et radialement au-dessus de l'élément annulaire et du profilé en forme de coin, présente une dureté Shore A au moins égale à la dureté du mélange caoutchouteux formant ledit profilé en forme de coin, le rapport e₁/e₂ de l'épaisseur e₁ entre le retournement d'armature de carcasse et l'élément annulaire d'ancrage sur l'épaisseur e₂ entre le retournement d'armature de carcasse et la paroi extérieure du bourrelet, mesurées sur la droite P₁ satisfaisant à la relation
0,05 ≤ e₁/e₂ ≤ 1,0.

On entend par génératrice inclinée vers l'extérieur une génératrice dont l'extrémité axialement intérieure est sur un cercle de diamètre supérieur au diamètre du cercle sur lequel se trouve l'extrémité axialement extérieure.

Si l'on appelle diamètre d'un siège incliné le diamètre du cercle sur lequel se trouve l'extrémité de sa génératrice la plus éloignée de l'axe de rotation, le pneumatique a préférentiellement deux sièges dits inclinés vers l'extérieur de diamètres différents.

Le profil méridien de l'armature de carcasse, lorsque le pneumatique est monté sur sa jante de service et gonflé à sa pression de service, a un sens de courbure constant au moins dans le premier bourrelet et le flanc qui le prolonge radialement, et la tangente TT' au point de tangence T dudit profil avec l'élément annulaire de renforcement dudit bourrelet fait avec l'axe de rotation un angle ø ouvert vers l'extérieur au moins égal à 70°.

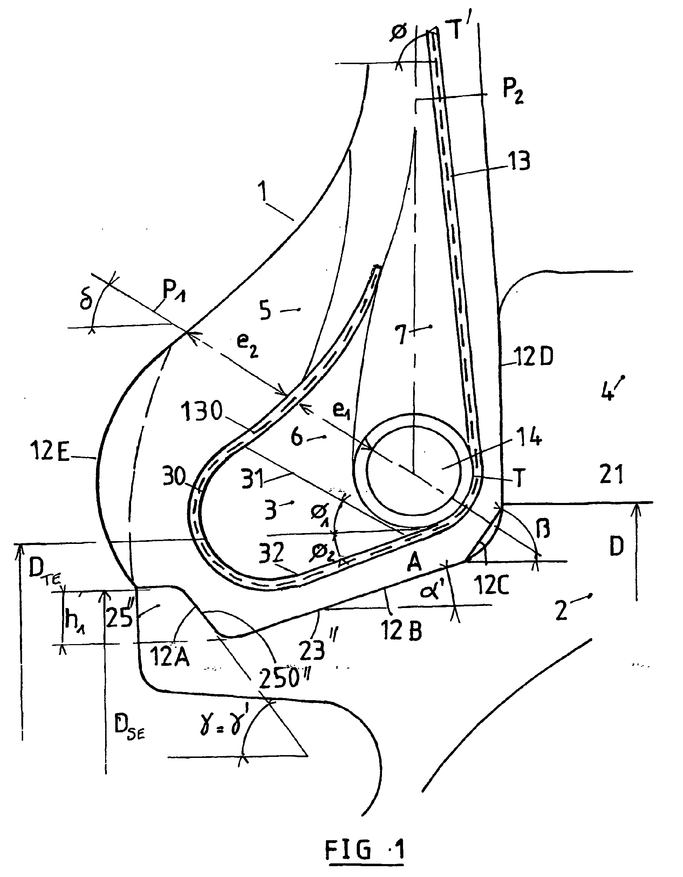

L'invention sera mieux comprise à l'aide du dessin annexé à la description, illustrant un exemple non limitatif d'exécution d'un pneumatique conforme à l'invention, et qui, associés à une jante adaptée, forme un ensemble pneumatique-jante performant. Sur ledit dessin, la figure unique 1 représente schématiquement un bourrelet de pneumatique conforme à l'invention, monté sur le siège de sa jante de montage.

La jante 2, sur laquelle sera monté le pneumatique 1 est formée principalement de deux sièges tronconiques dont les génératrices font avec l'axe de rotation un angle α', ouverts vers l'extérieur du pneumatique, compris entre 4° et 30° et dans l'exemple décrit égal à 14°, inférieur à l'angle des génératrices correspondantes des sièges des bourrelets 12 du pneumatique. Les dits sièges ont ainsi des extrémités axialement extérieures sur des cercles de plus petits diamètres que ceux des cercles sur lesquels se trouvent les extrémités axialement intérieures. Le siège 23 ", situé par exemple du côté extérieur du véhicule, est prolongé axialement à l'extérieur par une saillie ou hump 25" dont la face intérieure 250" fait avec l'axe de rotation un angle γ', dont le diamètre D_{SE} est inférieur au diamètre intérieur D_{TE} de la tringle 14 de renforcement du bourrelet destiné à être monté sur ledit siège, t dont la hauteur h₁, mesurée par rapport à l'extrémité axialement extérieure du siège de jante 23" est une hauteur comparable à la hauteur des humps ou saillies utilisées axialement à l'intérieur des jantes de tourisme usuelles et normalisées.

Sur le côté situé à l'extérieur du véhicule, le siège de jante 23" est relié à une portion cylindrique 21, sur laquelle viendra reposer un appui de soutien 4 de bande de roulement. Le diamètre de la portion cylindrique 21 est le diamètre nominal D de la jante 2.

Le contour du bourrelet 12, monté sur le siège 23", comprend, axialement à l'intérieur, une paroi 12D sensiblement perpendiculaire à l'axe de rotation, paroi qui peut prendre appui latéralement sur la face axialement extérieure de l'anneau de soutien 4. Ladite paroi 12D du bourrelet 12 est prolongée axialement à l'extérieur par une génératrice tronconique 12C, faisant avec une parallèle à l'axe de rotation un angle β de 45° ouvert axialement vers l'intérieur et radialement vers l'extérieur. Ladite génératrice 12C est elle-même prolongée axialement à l'extérieur par une seconde génératrice tronconique 12B de siège de bourrelet faisant avec la direction de l'axe de rotation un angle α égal à 15°, ouvert axialement vers l'intérieur et radialement vers l'extérieur. Ladite génératrice 12B est dite inclinée vers l'extérieur, son extrémité axialement extérieure étant sur un cercle de diamètre inférieur au diamètre du cercle sur lequel se trouve son extrémité axialement intérieure. Une génératrice tronconique 12A, prolongeant axialement à l'extérieur la génératrice 12B et faisant avec la direction de l'axe de rotation un angle γ égal à 45°, ouvert axialement et radialement vers l'extérieur, complète le contour de la base du bourrelet 12. La paroi 12E, courbe dans l'exemple décrit et d'orientation générale sensiblement perpendiculaire à la direction de l'axe de rotation de la jante, complète le contour du bourrelet 12. Alors que la génératrice 12B prendra appui sur le siège de jante 23", incliné vers l'extérieur, la génératrice 12A prendra appui sur la paroi axialement intérieure 250" de la saillie ou hump 25" de la jante 2, inclinée de l'angle γ', égal à l'angle γ de la génératrice 12A. La portion de bourrelet, adjacente à la paroi 12D et à la génératrice 12C, constitue, vue en section méridienne, le talon du bourrelet 12. La portion de bourrelet, adjacente à la génératrice 12B, à la génératrice 12A et partiellement à la paroi 12E, constitue la pointe du bourrelet 12. Le talon du bourrelet 12 est renforcé par la tringle d'ancrage 14 d'armature de carcasse 13, tringle enrobée d'un mélange de caoutchouc à haute dureté Shore A. La pointe du bourrelet 12 comprend un profilé 3, disposé axialement à l'extérieur de la tringle d'ancrage 14 de l'armature de carcasse 13. Ce profilé 3 se présente sous la forme d'un secteur sensiblement circulaire avec un sommet ou centre A situé radialement sous la tringle 14, deux côtés ou rayons 31 et 32 partant dudit sommet A, et un troisième côté 30, opposé au sommet A. Le côté ou rayon radialement extérieur 31 fait avec une parallèle à l'axe de rotation un angle ø₁, ouvert radialement et axialement vers l'extérieur, égal.à 45°, alors que le côté ou rayon radialement intérieur 32 fait avec la même parallèle un angle ø₂, ouvert radialement vers l'intérieur et axialement vers l'extérieur, égal à 15°. Ce profilé 3 est fait d'un mélange caoutchouteux ayant dans l'état vulcanisé une dureté Shore A au moins égale à 65 et dans le cas présent égale à 94 ; ladite dureté étant mesurée selon la norme ASTM D67549T.

La tringle 14 enrobée est surmontée radialement à l'extérieur d'un profilé 7 de mélange caoutchouteux de dureté Shore A élevée. Radialement à l'extérieur du profilé 3 et axialement à l'extérieur dudit profilé 7 est disposé un troisième profilé 6 en mélange caoutchouteux ayant une dureté Shore A égale à celle du profilé 7 et donc égale à la dureté du mélange du profilé 3, ce qui permet d'augmenter les rigidités en particulier transversales et longitudinales des bourrelets tout en conservant, lors d'un accroissement de tension de l'armature de carcasse, la création d'une compression du profilé 3 et un auto-serrage de la pointe de bourrelet sur la jante 2 de montage, alors que, dans le cas décrit, le serrage initial du bourrelet 12 sur ladite jante est pratiquement nul, du fait de la quasi-égalité entre les angles α et α' et des plus grands diamètres des sièges de jante et de bourrelets. Le bourrelet 12 est complété par le protecteur 5.

L'armature de carcasse 13 a un profil méridien, lorsque le pneumatique est monté sur sa jante de service et gonflé à sa pression de service, qui a un sens de courbure constant sur toute sa longueur, et est tel que les tangentes TT' aux points de tangence T dudit profil avec les tringles enrobées 14 des bourrelets 12 font avec l'axe de rotation des angles φ ouverts axialement et radialement vers l'extérieur et égaux à 80°. Ladite armature de carcasse 13 est enroulée autour de la tringle enrobée 14 en allant du talon à la pointe du bourrelet 12, ou de l'intérieur à l'extérieur , pour former un retournement 130, qui s'étend le long du côté radialement intérieur 32 du profilé 3, puis le long du côté 30 opposé au sommet A pour ensuite recouvrir au moins partiellement le côté axialement et radialement extérieur du profilé 6 radialement à l'extérieur du profilé 3. L'extrémité du retournement 130 est radialement située au dessus de la tringle 14, et axialement localisée entre les deux droites P₁ et P₂, la droite P₁ étant la droite passant par le centre de gravité de la section méridienne de la tringle 14 et faisant avec l'axe de rotation un angle δ ouvert axialement et radialement vers l'extérieur égal à 45°, la droite P₁ étant perpendiculaire à la génératrice tronconique 12 C du talon de bourrelet, et la droite P₂ étant une droite perpendiculaire à l'axe de rotation et passant par ledit centre de gravité. Le retournement 130 d'armature de carcasse a un profil méridien tel que le rapport de l'épaisseur e₁ sur l'épaisseur e₂ est approximativement égal à 0,8, l'épaisseur e₁ étant l'épaisseur de mélange caoutchouteux compris entre la face axialement intérieure du retournement 130 d'armature de carcasse 13 et la face métallique de la tringle 14, alors que l'épaisseur e₂ est l'épaisseur de mélange caoutchouteux compris entre la face axialement extérieure du retournement 130 et la paroi extérieure du bourrelet, les deux épaisseurs e₁ et e₂ étant mesurées sur la droite P₁ définie ci-dessus. Le retournement 130, ainsi structuré en combinaison avec les duretés élevées des mélanges de caoutchouc qui l'entourent, présente ainsi une longueur suffisante pour pouvoir présenter une bonne tenue vis-à-vis du déroulement d'armature de carcasse, tout en permettant de retarder l'apparition des fissures dans la couche extérieure 5 du bourrelet 12, sans que soit pénalisé de manière significative la vitesse de propagation des dites fissures.

## Revendications

1. Pneumatique (1) à armature de carcasse radiale (13) comprenant, vu en section méridienne, deux bourrelets (12), chaque bourrelet ayant un siège (12B) dont la génératrice est inclinée vers l'extérieur, et un talon axialement à l'intérieur, renforcé par au moins un élément annulaire (14) inextensible autour duquel l'armature de carcasse (13) s'enroule an allant du dit talon à la pointe dudit bourrelet pour former un retournement (130), alors que la pointe, axialement à l'intérieur, comprend un profilé (3) de mélange caoutchouteux de dureté Shore A au moins égale à 65 et sous forme de coin délimité par trois côtés (30, 31, 32) dont deux (31, 32) sont issus d'un sommet A localisé sous l'élément annulaire (14), le retournement (130) d'armature de carcasse (13) longeant les côtés latéral (30) et radialement interne (32) dudit profilé (3) en forme de coin et possédant une extrémité située d'une part axialement à l'extérieur d'une droite P₂ perpendiculaire à l'axe de rotation et passant par le centre de gravité de la section méridienne de l'élément annulaire d'ancrage (14) et d'autre part axialement à l'intérieur et radialement à l'extérieur de la droite P₁ passant par ledit centre de gravité et faisant avec l'axe de rotation un angle δ ouvert axialement et radialement vers l'extérieur compris entre 30° et 60°, ce pneumatique comprenant deux profilés de mélange caoutchouteux remplissant l'espace entre la partie principale d'armature de carcasse et son retournement au-dessus de l'élément annulaire et du profilé en forme de coin, l'un desdits profilés étant situé radialement au-dessus de l'élément annulaire, ce pneumatique étant **caractérisé en ce que** au moins l'un des profilés (6, 7) de mélanges caoutchouteux, remplissant l'espacé entre la partie principale d'armature de carcasse (13) et son retournement (130) et radialement au-dessus de l'élément annulaire (14) et du profilé (3) en forme de coin, présente une dureté Shore A au moins égale à la dureté du mélange caoutchouteux formant ledit profilé (3), le rapport e₁/e_{2.} de l'épaisseur e₁ entre le retournement (130) d'armature de carcasse et l'élément annulaire d'ancrage (14) sur l'épaisseur e₂ entre le retournement (130) d'armature de carcasse et la paroi extérieure du bourrelet, mesurées sur la droite P₁, satisfaisant à la relation 0,05 ≤ e₁/e₂ ≤ 1,0.

2. Pneumatique selon la revendication 1, **caractérisé en ce que** ledit pneumatique a deux sièges dits inclinés vers l'extérieur de diamètres différents.

## Patentansprüche

1. Luftreifen (1) mit radialer Karkassenbewehrung (13), der im Meridianschnitt zwei Wülste (12) aufweist, wobei jeder Wulst einen Sitz (12B), dessen Erzeugende nach außen geneigt ist, und axial innen einen Wulstfuß aufweist, der mit mindestens einem nichtdehnbaren ringförmigen Element (14) verstärkt ist, um den die Karkassenbewehrung (13) von dem Wulstfuß zur Spitze des Wulstes zur Bildung eines Hochschlages (130) umgeschlagen ist, wobei die Spitze axial innen ein Profilteil (3) aus einer Kautschukmischung mit einer Shore A-Härte von 65 aufweist, das keilförmig ist und von drei Seiten (30, 31, 32) begrenzt wird, von denen zwei (31, 32) von einem Scheitel A ausgehen, der sich unter dem ringförmigen Element (14) befindet, wobei der Hochschlag (130) der Karkassenbewehrung (13) an der lateralen Seite (30) und der radial inneren Seite (32) des keilförmigen Profilteils (3) entlanggeht und ein Ende aufweist, das sich einerseits axial außen an einer Geraden P2 befindet, die senkrecht zur Drehachse verläuft und durch den Schwerpunkt des Meridianschnitts des ringförmigen Elements zur Verankerung (14) hindurchgeht, und andererseits axial innen und radial außen an der Geraden P₁ liegt, die durch den Schwerpunkt hindurchgeht und mit der Drehachse einen axial und radial nach außen offenen Winkel δ von 30° bis 60° bildet, wobei der Luftreifen zwei Profilteile aus einer Kautschukmischung umfasst, die den Raum zwischen dem Hauptteil der Karkassenbewehrung und ihrem Hochschlag um das ringförmige Element und das keilförmige Profilteil ausfüllen, wobei sich ein Profilteil radial über dem ringförmigen Element befindet, wobei der Luftreifen **dadurch gekennzeichnet ist, dass** mindestens eines der Profilteile (6, 7) aus Kautschukmischungen, das den Raum zwischen dem Hauptteil der Karkassenbewehrung (13) und ihrem Hochschlag (130) einnimmt und radial über dem ringförmigen Element (14) und dem keilförmigen Profilteil (3) liegt, eine Shore A-Härte aufweist, die mindestens der Härte der Kautschukmischung entspricht, die das Profilteil (3) bildet, wobei das Verhältnis e₁/e₂ der Dicke e₁ zwischen dem Hochschlag (130) der Karkassenbewehrung und dem ringförmigen Verankerungselement (14) und der Dicke e₂ zwischen dem Hochschlag (130) der Karkassenbewehrung und der Außenwand des Wulstes, die an der Geraden P₁ gemessen werden, die Beziehung 0,05 ≤ e₁/e₂ ≤ 1,0 erfüllt.

2. Luftreifen nach Anspruch 1, **dadurch gekennzeichnet, dass** der Luftreifen zwei nach außen geneigte Sitze mit unterschiedlichen Durchmessern aufweist.

## Claims

1. A tyre (1) having a radial carcass reinforcement (13) comprising, viewed in meridian section, two beads (12), each bead having a seat (12B) the generatrix of which is inclined towards the outside, and a heel axially to the inside, reinforced by at least one inextensible annular element (14) around which the carcass reinforcement (13) is wound, extending from said heel to the toe of said bead to form an upturn (130), whereas the axially inner toe comprises a profiled element (3) of rubber mix of a Shore A hardness of at least 65 and in the form of a wedge defined by three sides (30, 31, 32), two (31, 32) of which have originated from an apex A located beneath the annular element (14), the upturn (130) of the carcass reinforcement (13) running along the lateral (30) and radially inner (32) sides of said wedge-shaped profiled element (3) and having an end located firstly axially to the outside of a straight line P₂ perpendicular to the axis of rotation and passing through the centre of gravity of the meridian section of the annular anchoring element (14) and secondly axially to the inside and radially to the outside of the straight line P₁ passing through said centre of gravity and forming with the axis of rotation an angle δ open axially and radially towards the outside of between 30° and 60°, this tyre comprising two profiled elements of rubber mix filling the space between the main part of the carcass reinforcement and its upturn above the annular element and the wedge-shaped profile, one of said profiled elements being located radially above the annular element, this tyre being **characterised in that** at least one of the profiled elements (6, 7) of rubber mixes filling the space between the main part of the carcass reinforcement (13) and its upturn (130) and radially above the annular element (14) and the wedge-shaped profiled element (3) has a Shore A hardness at least equal to the hardness of the rubber mix forming said profiled element (3), the ratio e₁/e₂ of the thickness e₁ between the carcass reinforcement upturn (130) and the annular anchoring element (14) to the thickness e₂ between the carcass reinforcement upturn (130) and the outer wall of the bead, measured on the straight line P₁, satisfying the relationship 0.05 ≤ e₁/e₂ ≤ 1.0.

2. A tyre according to Claim 1, **characterised in that** said tyre has two seats said to be inclined towards the outside of different diameters.
